# EUROPÄISCHE PATENTSCHRIFT

(11) **EP 2 227 407 B1**
(45) Veröffentlichungstag und Bekanntmachung des Hinweises auf die Patenterteilung: **18.05.2011**
(21) Anmeldenummer: 08855074.4
(22) Anmeldetag: 29.09.2008
(51) Int. Cl.: B60S 1/08, G01W 1/14

(54) **SENSOR, INSBESONDERE REGENSENSOR UND/ODER LICHTSENSOR**
SENSOR, PARTICULARLY RAIN SENSOR AND/OR LIGHT SENSOR
CAPTEUR, EN PARTICULIER CAPTEUR DE PLUIE ET/OU CAPTEUR DE LUMIÈRE

(30) Priorität: 28.11.2007 DE 102007057139
(43) Veröffentlichungstag der Anmeldung: 15.09.2010
(73) Patentinhaber: Robert Bosch GmbH, 70442 Stuttgart (DE)
(72) Erfinder: ESPENSCHIED, Wolfgang, 77866 Rheinau-Freistett (DE)
(86) Internationale Anmeldenummer: PCT/EP2008/063011
(87) Internationale Veröffentlichungsnummer: WO 2009/068343

(56) Entgegenhaltungen:
- EP-A- 1 312 521
- EP-A- 1 810 896
- DE-A1- 10 060 447
- DE-A1- 10 256 835
- DE-A1-102005 015 973
- DE-U1- 29 906 013
- DE-U1- 29 924 838

## Beschreibung

### Stand der Technik

Die vorliegende Erfindung betrifft einen Sensor, insbesondere Regensensor und/oder Lichtsensor, nach der Gattung des Anspruchs 1.

Es ist bekannt bei Sensoren, insbesondere bei kombinierten Regen- und Lichtsensoren, diese an einer Scheibe anzubringen. Hierzu wird der Sensor an einer an der Scheibe fest befestigten Halte- oder Trägerplatte lösbar angebracht. Die Montage des Sensors bzw. des Sensormoduls an die Halte- oder Trägerplatte erfolgt dabei per Hand in der Regel beim Automobilhersteller. Mittels lösbarer Verbindung soll sichergestellt werden, dass, ohne zusätzliche Werkzeuge, auch eine zerstörungsfreie Demontage und Montage in den Werkstätten möglich ist. Die lösbare Verbindung zwischen Sensormodul und Trägerplatte kann mittels Federklammer erfolgen, welche am Gehäuse an einem Oberteil (Gehäusedeckel) angreifend das Sensormodul an die Windschutzscheibe drückt. Es liegt somit ein Klemmverbund zwischen Oberteil (Gehäusedeckel), einer zwischen Oberteil und einem Unterteil vorgesehenen Leiterplatte und dem Unterteil des Sensormoduls vor. Nachteilig ist dabei, dass Toleranzen von allen einzelnen Komponenten ausgeglichen werden müssen, was fertigungstechnisch aufwändig ist.

Ferner ist es ein Bedürfnis, einfache und sichere Halterungen für Sensoren an Scheiben bereitzustellen, die in der Herstellung kostengünstig sind und eine sichere und insbesondere einfach zu gestaltende Montage und Demontage erlauben.

Aus DE 299 24 838 U1 ist ein Sensor zum optischen Erfassen von Fremdkörpern, insbesondere Regentropfen auf einer Scheibe, bekannt. Der Regensensor weist ein Gehäuse auf, das an einer an einer Scheibe gehaltenen Trägerplatte lösbar befestigt ist. Zur lösbaren Verbindung ist eine Federklammer vorgesehen, die am Gehäuse und an der Drehplatte angreift. Die Federklammer weist neben einem zentralen Federklammerelement zwei äußere Arme und zwei innere Arme auf. Die äußeren Arme greifen in an der Trägerplatte ausgebildete Aufnehmungen ein.

### Vorteile der Erfindung

Der erfindungsgemäße Sensor, insbesondere Regensensor und/oder Lichtsensor, mit den Merkmalen des Anspruchs 1 hat demgegenüber den Vorteil, dass nur geringere Toleranzen von einzelnen Komponenten ausgeglichen werden müssen, so dass fertigungstechnisch weniger Aufwand erforderlich ist. Von besonderem Vorteil ist insbesondere, dass sich die Montage und Demontage einfach und zuverlässig bewerkstelligen lässt.

Eine sichere und zuverlässige Halterung des Sensormoduls an der Scheibe ist gegeben, bei einem Oberteil des Gehäuses des Sensors, das eine plateauförmigen Aussparung aufweist, an die sich ein zentrales Federklammerelement einer Federklammer im montierten Zustand abstützt.

Weitere Vorteile und vorteilhafte Ausgestaltungen der Erfindung ergeben sich aus den Unteransprüchen und der Beschreibung.

### Zeichnung

Ausführungsbeispiele der Erfindung sind in der nachfolgenden Beschreibung näher erläutert und anhand der Zeichnung weiter verdeutlicht.

Es zeigt:

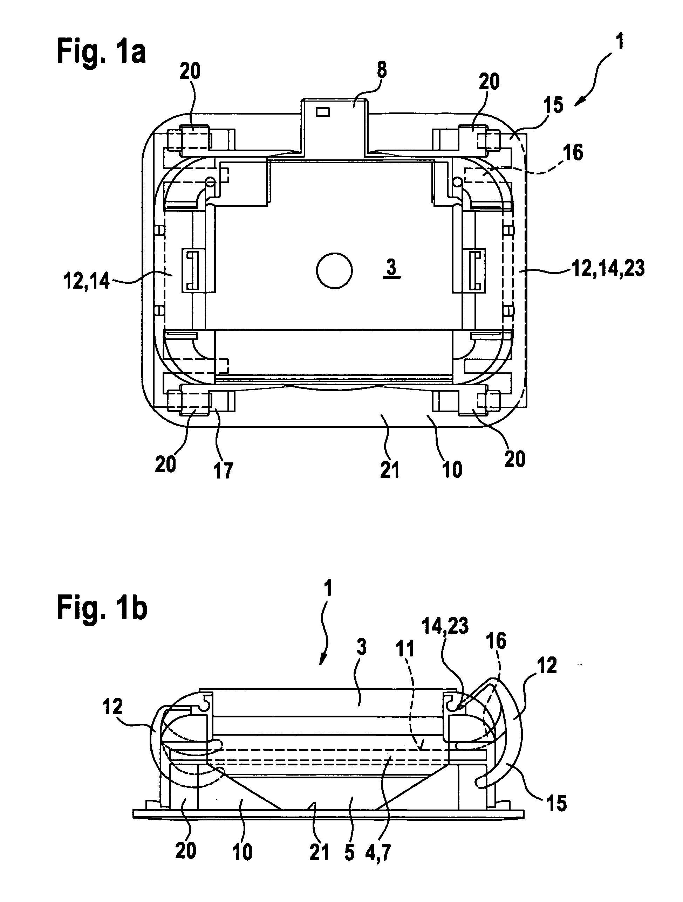

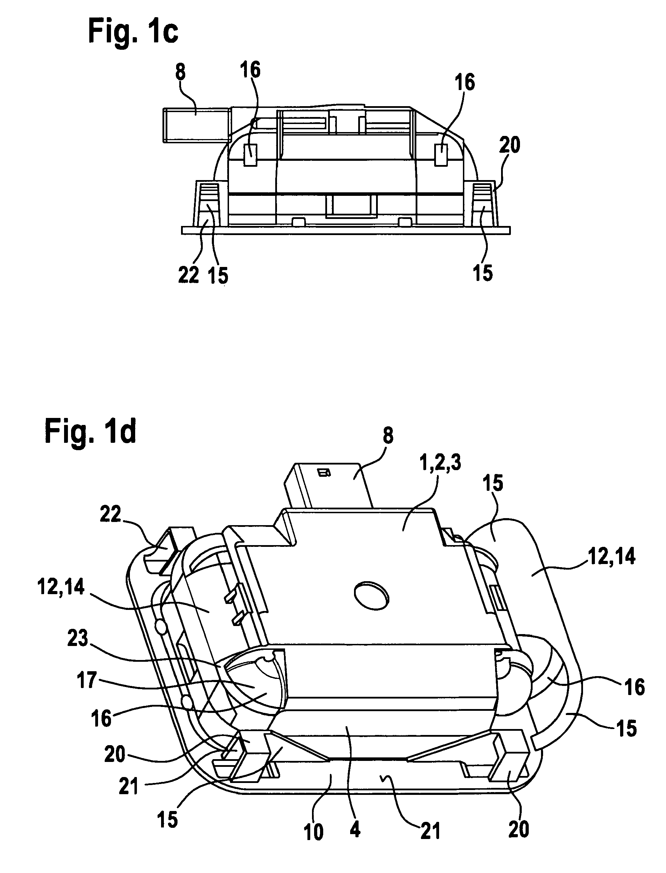

- Fig. 1: einen Sensor, der gemäß einem ersten Ausführungsbeispiel über zwei Federklammern an der Trägerplatte gehalten ist, aufgeteilt in Fig. 1a in Draufsicht, Fig. 1b in Seitenansicht und Fig. 1c eine weitere, um 180 Grad gedrehte Seitenansicht und Fig. 1d eine perspektivische Ansicht.

### Ausführungsform der Erfindung

Bei dem erfindungsgemäßen Sensor 1 handelt es sich um einen kombinierten Regen- und Lichtsensor. Selbstverständlich kann es sich bei dem Sensor auch alleinig um einen Regensensor oder alleinig um einen Lichtsensor handeln. Der Regensensor ist bekanntermaßen vorgesehen, um ein Wischersystem eines Fahrzeugs automatisch zu steuern. Mittels integriertem Lichtsensor kann zusätzlich das Umgebungslicht sowie die Ausleuchtung in Fahrtrichtung erfasst werden und das Fahrtlicht automatisch an die jeweilige Situation angepasst werden.

Gleiche und gleichwirkende Bauteile sind in den Ausführungsbeispielen stets mit denselben Bezugszeichen versehen.

Wie die Fig. 1 nach einem ersten erfindungsgemäßen Ausführungsbeispiel zeigt, weist der Sensor 1 ein Gehäuse 2 auf, das im Wesentlichen aus drei Teilen, einem Oberteil 3, einem innenliegenden mittleren Teil 4 und einem Unterteil 5, aufgebaut ist. Der mittlere Teil 4 enthält die Elektronikeinheit, die vorzugsweise im Oberteil 3 aufgenommen ist. Die Elektronikeinheit umfasst die elektronischen und optischen Komponenten, die größtenteils auf einer Leiterplatte 7 untergebracht sind und außerdem einen elektrischen Anschluss 8. Die in der Seitenansicht nach Fig. 1b angedeutete Leiterplatte 7 weist zum Beispiel einen Sender in Form einer Leuchtdiode LED, einen Fernsensor und eine Fotodiode als Empfänger sowie einen Umgebungslichtsensor auf. An die Leiterplatte 7 angebunden ist der elektrische Anschluss 8, der ausgespart vom Oberteil 3 seitlich vom Oberteil 3 etwas wegsteht.

Das Unterteil 5 umfasst eine Optikeinheit, die unter anderem mehrere Linsen zur Strahlbündelung aufweist. Oberteil 3 und Unterteil 5 sind beispielsweise mittels Rast- oder Steckverbindung oder dergleichen verbunden und bilden mit dem dazwischenliegenden mittleren Teil 4 ein kompaktes Sensormodul bzw. den Sensor 1, der zur Funktion neben erfolgtem elektrischen Anschluss lediglich noch den Kontakt zu einer Scheibe, insbesondere einer Windschutzscheibe eines Kraftfahrzeugs, benötigt.

Das Sensormodul 1 wird dann als Ganzes lösbar an eine Trägerplatte 10 montiert, wofür eine in einem ersten Ausführungsbeispiel in Fig. 1 gezeigte beidseitige Federklammer 12 vorgesehen ist. Die Trägerplatte 10 ist über eine Klebverbindung fest an der Windschutzscheibe befestigt. In der Regel erfolgt dies bereits beim Scheibenhersteller. Die Federklammer 12 klammert das Gehäuse 2 des Sensors 1 an die Trägerplatte 10. Die Federklammer 12 ist hierzu elastisch federnd ausgebildet und besteht zum Beispiel aus Edelstahl. Mittels einer starken Federkraft wird dabei eine Klemmverbindung geschaffen, die ein selbstständiges Lösen des Sensors 1 von der Trägerplatte 10 unmöglich macht.

Die Federklammer 12 weist neben einem zentralen, abgewinkelten, rechteckförmigen Federklammerelement 14 zwei äußere Arme 15 und zwei innere Arme 16 auf. Die inneren Arme 16, die auch als Laschen bezeichnet werden können, greifen durch vorgesehene, korrespondierende Öffnungen 17 im Oberteil 3 des Gehäuses 1 in das Oberteil 3 hinein. Die äußeren Arme 15 greifen in an der Trägerplatte 10 ausgebildete Aufnahmen 20 ein. Die Aufnahmen 20 sind an den Ecken der Trägerplatte 10 vorgesehen. Die Aufnahmen 20 sind zum Beispiel U-förmig gebogen und stehen von einer Unterseite 21 der Trägerplatte 10 ab. Die Aufnahmen 20 weisen zum Beispiel rechteckförmige Aufnahmeöffnungen 21 auf.

Das Oberteil 3 bzw. das Sensormodul 1 insgesamt, hat eine quaderförmige Form. Zur Befestigung des aus Oberteil 3, Unterteil 5 und mittleren Teil 4 bestehenden Sensormoduls 1 an die Trägerplatte 10 sind zwei Federklammern 12 vorgesehen, die zum Beispiel an kürzeren Seitenflächen des Oberteils 3 angreifen. Hierzu ist ein zentrales, rechteckförmig ausgebildetes, abgebogenes Federklammerelement 14 an der Federklammer 12 ausgebildet, das im montierten Zustand auf einem entsprechend plateauförmigen Absatz oder einer plateauförmigen Aussparung 23 im Oberteil 3 anliegt. Zur Montage wird die in Fig. 1b oder in Fig. 1d rechts in nicht montierten Zustand dargestellte Federklammer 12 zur Trägerplatte 10 hin gedrückt. Dabei greifen die inneren Arme 16 in das Innere des Oberteils 3 hinein. Zugleich greifen die äußeren Arme 15 in die Aufnahmen 20 an der Trägerplatte 10 ein, bis es zu einem Verklemmen bzw. Verrasten der Federklammern 12 am Oberteil 3 und an der Trägerplatte 10 kommt. Eine montierte Federklammer 12 ist in Figuren 1b und 1d links dargestellt. Die inneren Arme 16 liegen dabei an einer Oberfläche 11 der im Oberteil 3 untergebrachten Leiterplatte 7 des mittleren Teils 4 an. Die Leiterplatte 7 wird dann mittels der inneren Arme 16 bzw. Laschen auf das Unterteil 5 gepresst.

Die Trägerplatte 10 selbst ist rahmenförmig ausgebildet und an die Scheibe fest geklebt. Die Trägerplatte 10 ist zur Befestigung des Sensormoduls 1 vorgesehen, das innerhalb des Rahmens über ein an dem Unterteil 5 vorgesehenes, nicht näher dargestelltes, lichtdurchlässiges Verbindungskissen direkt an die Scheibe gepresst wird. Es liegt somit ein Klemmverbund zwischen Leiterplatte 7 und Unterteil 5 zur Scheibe hin vor. Die Federklammern 12 sind zwar am Gehäuse 2 des Sensors 1 befestigt, aber das Sensormodul 1 wird über seine Leiterplatte 7 quasi auf direktem Weg an die Scheibe gedrückt. Die Leiterplatte 7 ist in einer Ebene des Sensormoduls 1 (Scheibenebene, x-y-Ebene) von dem Unterteil 5 gehalten. In zur Ebene des Sensormoduls 1 quer verlaufender Höhenrichtung (z-Richtung) erfolgt die Positionierung der Leiterplatte 7 über die inneren Arme 16 der Federklammer 12. Damit müssen lediglich die Toleranzen von Leiterplatte 7 und Unterteil 5 ausgeglichen werden, was fertigungstechnisch einfacher zu bewerkstelligen ist als den kompletten Aufbau des Sensormoduls über eine am Gehäuse (Gehäusedeckel) angreifende Federklammer an die Scheibe zu drücken. Bei der Scheibe handelt es sich vorzugsweise um eine Windschutzscheibe eines Kraftfahrzeugs.

## Patentansprüche

1. Sensor, insbesondere Regensensor und/oder Lichtsensor, mit einem Gehäuse, das an einer an einer Scheibe gehaltenen Trägerplatte lösbar befestigbar ist, wobei zur lösbaren Verbindung eine Federklammer angreifend an Gehäuse und an Trägerplatte vorgesehen ist, und die Federklammer (12) neben einem zentralen Federklammerelement (14) zwei äußere Arme (15) und zwei innere Arme (16) aufweist, **dadurch gekennzeichnet, dass** die inneren Arme (16) durch vorgesehene Öffnungen (17) in das Gehäuses (2) hinein eingreifen und auf eine im Gehäuse (2) untergebrachte Leiterplatte (7) drücken und die äußeren Arme (15) in an der Trägerplatte (10) ausgebildete Aufnahmen (20) eingreifen.

2. Sensor nach Anspruch 1, **dadurch gekennzeichnet, dass** ein Oberteil (3) des Gehäuses (2) eine plateauförmigen Aussparung (23) aufweist, an die sich das zentrale Federklammerelement (14) der Federklammer (12) im montierten Zustand abstützt.

## Claims

1. Sensor, particularly rain sensor and/or light sensor, with a housing which can be fastened releasably to a carrier plate held on a window, wherein, for the releasable connection, a spring clip acts on the housing and on the carrier plate, and the spring clip (12), in addition to a central spring clip element (14), has two outer arms (15) and two inner arms (16), **characterized in that** the inner arms (16) engage through provided openings (17) into the housing (2) and press onto a printed circuit board (7) accommodated in the housing (2), and the outer arms (15) engage in receptacles (20) formed on the carrier plate (10).

2. Sensor according to Claim 1, **characterized in that** an upper part (3) of the housing (2) has a plateau-shaped cutout (23) on which the central spring clip element (14) of the spring clip (12) is supported in the fitted state.

## Revendications

1. Capteur, en particulier capteur de pluie et/ou capteur de lumière, comprenant un boîtier qui peut être fixé de manière amovible sur une plaque support maintenue sur une vitre, une pince à ressort étant prévue pour la connexion amovible et venant en prise avec le boîtier et avec la plaque support, et la pince à ressort (12) présentant, en plus d'un élément de pince à ressort central (14), deux bras extérieurs (15) et deux bras intérieurs (16), **caractérisé en ce que** les bras intérieurs (16) viennent en prise dans le boîtier (2) à travers des ouvertures (17) et pressent sur une carte à circuits imprimés (7) montée dans le boîtier (2) et les bras extérieurs (15) viennent en prise dans des logements (20) réalisés sur la plaque support (10).

2. Capteur selon la revendication 1, **caractérisé en ce qu'**une partie supérieure (3) du boîtier (2) présente un évidement en forme de plateau (23), sur lequel s'appuie l'élément de pince à ressort central (14) de la pince à ressort (12) dans l'état monté.
